# EUROPÄISCHE PATENTSCHRIFT

(11) **EP 0 656 374 B1**
(45) Veröffentlichungstag und Bekanntmachung des Hinweises auf die Patenterteilung: **22.10.1997**
(21) Anmeldenummer: 94118468.1
(22) Anmeldetag: 24.11.1994
(51) Int. Cl.: C08F 20/12

(54) **Polymethacrylat-Formmasse mit hoher Wärmeformbeständigkeit und hoher Stabilität gegen thermischen Abbau**
Polymethacrylate moulding matter with elevated heat distortion resistance and elevated resistance against thermal degradation
Masse à mouler en polyméthacrylate à stabilité dimensionelle à chaud élevée et stabilité élevée contre la décomposition thermique

(30) Priorität: 01.12.1993 DE 4340887
(43) Veröffentlichungstag der Anmeldung: 07.06.1995
(73) Patentinhaber: Röhm GmbH, 64293 Darmstadt (DE)
(72) Erfinder: Siol, Werner, Dr., D-64297 Darmstadt (DE); Wicker, Michael, Dr., D-64342 Seeheim-Jugenheim (DE); Koralewski, Klaus, D-64560 Riedstadt (DE); Terbrack, Ulrich, D-64354 Reinheim (DE)

(56) Entgegenhaltungen:
- GB-A- 1 490 859

## Beschreibung

### Gebiet der Erfindung

Die Erfindung betrifft ein Verfahren zur Herstellung von Polymethacrylat-Formmassen mit hoher Wärmeformbeständigkeit und hoher Stabilität gegen thermischen Abbau, wobei mindestens 70 % der Formmasse bei einer Monomerkonzentration von mehr als 5 mol Methacrylat pro Liter Reaktionsmischung hergestellt werden.

### Stand der Technik

Polymethacrylat-Formmassen werden in der Regel durch diskontinuierliche oder kontinuierliche Substanzpolymerisation sowie durch Perlpolymerisation hergestellt. Das diskontinuierliche Verfahren, das bei niedrigen Temperaturen, beispielsweise zwischen 20 und 50 Grad C, durchgeführt wird, ist sehr zeit- und arbeitsintensiv, weshalb es in neuerer Zeit zunehmend durch kontinuierliche, technisch jedoch aufwendige Polymerisationsverfahren fast vollständig abgelöst wurde.

Die kontinuierliche Polymerisation wird beispielsweise in einer Zone steigender Temperaturen von 130 bis 250 Grad C in einer als Exruder ausgeführten Polymerisationsanlage durchgeführt. Vor der Isolierung des Polymerisats als Extrudat wird in einer Entgasungszone nicht umgesetztes Monomeres, dessen Anteil bis zu 40 Gew.-% des eingesetzten Monomeren sein kann, abgezogen und der Polymerisation wieder zugeführt.
Bei der Polymerisation muß man zur Erreichung hoher Raum-Zeit-Ausbeuten die Polymerisation bei Temperaturen um 100 Grad C und in Gegenwart von relativ hohen Initiatorkonzentrationen durchführen (vgl. beispielsweise Vieweg, Esser, Kunststoff-Handbuch, Band IX, Seiten 22 bis 35, Carl Hanser Verlag, München, 1975 oder Ullmanns Enzyklopädie der technischen Chemie, 4. Auflage, Band 19, Seiten 22 bis 27, Verlag Chemie, Weinheim, 1980). Darüber hinaus ist die Herstellung von Polymethacrylat-Formmassen durch Lösungspolymerisation und nachfolgendes Abdampfen des Lösungsmittels bekannt.
Im allgemeinen wird zur Stabilisierung gegen den thermischen Abbau von Polymethacrylat-Formmassen das Methacrylat mit wenigen Prozenten eines Acrylsäureesters oder mit Styrol copolymerisiert.
Die Polymerisationsverfahren zur Herstellung thermoplastisch verarbeitbarer Polymethacrylat-Formmassen werden im allgemeinen in Gegenwart von Übertragungsreglern, insbesondere in Gegenwart von Mercaptanen, durchgeführt, die als Kettenabbruchregler in den Polymerisationsmechanismus eingreifen und so den Polymerisationsgrad und die chemische Struktur der Polymerendgruppen beeinflussen. Mit den Mercaptanen als den bekanntesten Reglern entstehen so im allgemeinen Polymerisate, die eine höhere Zahl an thermisch stabileren Endgruppen besitzen als ungeregelt hergestellte Polymethacrylate (DE-PS 16 45 232). Die Natur der Endgruppe ist für die thermische Stabilität von Polymethacrylat-Formmassen von besonderer Bedeutung. So konnte in Modellversuchen gezeigt werden, daß Polymethylmethacrylat-Polymerketten mit gesättigten Endgruppen, wie sie durch Übertragung gebildet werden, bis zu Temperaturen von mehr als 300 Grad C stabil sind, während Polymerketten, die duch Disproportionierungsabbruch gebildet worden sind und demzufolge eine olefinische Doppelbindung am Kettenende aufweisen, bereits bei ca. 250 Grad C thermisch abgebaut werden [P. Cacioli et al., Polymer Bulletin 11, 325 (1984)]. Ganz besonders instabil sind Polymethylmethacrylat (PMMA)-Polymerketten, die durch Rekombinationsabbruch entstanden sind und die nur bis 190 Grad C thermisch stabil sind.
Zur Erzielung einer befriedigenden thermischen Stabilisierung wird vorteilhafterweise der Einbau von Acrylsäureestern und die Polymerisation in Gegenwart von Mercaptanen bei den technischen Herstellungsverfahren von Polymethacrylat-Formmassen kombiniert, wobei darüber hinaus zur besseren Verarbeitung niedermolekulare Stabilisatoren zugesetzt werden.
Die Wärmeformbeständigkeit von Polymethacrylat-Formmassen, die beispielsweise durch die Glasübergangstemperatur Tg oder die Vicat-Erweichungstemperatur VST nach DIN 53460 definiert sein kann, wird maßgeblich durch die Taktizität der Polymethacrylat-Polymerketten, die sich in Abhängigkeit vom Polymerisationsverfahren in weiten Grenzen variieren läßt, beeinflußt. Technisch erwünscht sind hohe Anteile an syndiotaktischen und heterotaktischen Triaden, die zu Formmassen mit hoher Wärmeformbeständigkeit führen, neben niedrigen Anteilen an isotaktischen Triaden in den Polymerketten. Solche Taktizitäten werden bei niedrigen Polymerisationstemperaturen erhalten, wobei bei solchen Polymerisationsverfahren zur Erzielung hoher Raum-Zeit-Ausbeuten vergleichsweise hohe Initiatorkonzentrationen verwandt werden müssen. Dadurch entstehen vermehrt Polymerketten, die, wie schon ausgeführt, durch einen Rekombinationsabbruch oder Disproportionierungsabbruch terminiert werden und damit eine geringere Thermostabilität erwarten lassen. Andererseits erreicht man mit der Polymerisation bei erhöhten Temperaturen, beispielsweise in einem kontinuierlichen Polymerisationsverfahren bei etwa 180 Grad C bereits mit relativ geringen Mengen an Initiator, Polymere mit einer guten Stabilität gegen thermischen Abbau in einer guten Raum-Zeit-Ausbeute. Aufgrund der hohen Polymerisationstemperatur erhält man, allerdings bedingt durch hohe Anteile an isotaktischen Triaden, ein Polymerisat mit geringer Wärmeformbeständigkeit. Eine technische Lehre zur Überwindung diese Dilemmas gibt EP-PS 0 245 647 (= US-Patent 4 877 853). Dort wird eine thermoplastisch verarbeitbare Polymethacrylat-Formmasse mit hoher Wärmeformbeständigkeit und hoher Stabilität gegen thermischen Abbau beschrieben, wobei ein Anteil von mehr als 60 % syndiotaktischen Triaden vorliegt, vorzugsweise ein Initiator-Regler-Verhältnis von weniger als 1 : 2 vorliegt und wobei die Polymethacrylat-Formmasse bei Temperaturen zwischen 0 und 100 Grad C durch Emulsionspolymerisation hergestellt wird.
Kontinuierliche Polymerisationsverfahren, die mit niedrigeren Umsätzen und hohen Polymerisationstemperaturen bei guten Raum-Zeit-Ausbeuten arbeiten, sind beispielsweise in Jpn. Kokai Tokkyo Koho JP 04,146,903 dargestellt, wo die Polymerisation von Methylmethacrylat (MMA) bis zu Umsätzen von 20 bis 50 %, die anschließende Monomerentgasung sowie die Endpolymerisation des Polymersirups zu PMMA-Platten mit guten optischen Eigenschaften beschrieben werden.
US-Patent 2,974,125 umfaßt die Herstellung von Copolymerisaten aus MMA, Styrol und Acrylnitril, wobei die Polymerisation bei Temperaturen zwischen 130 und 155 Grad C bis zu Umsätzen zwischen 10 und 50 % geführt wird. Die nicht umgesetzten Monomeren werden vorzugsweise durch Entgasen entfernt und die resultierenden Polymerisate zeichnen sich durch hohe Reißdehnungswerte aus.
In DE-AS 25 04 417 wird ein Verfahren zur Herstellung von Methylmethacrylat-Polymerisaten beschrieben, enthaltend mindestens 80 Gew.-% MMA-Einheiten, wobei die Monomeren bei Temperaturen zwischen 150 und 180 Grad C bis zu einem Umsatz von 50 bis 80 % im Rührreaktor umgesetzt werden und die nicht umgesetzten Monomeren durch Anlegen eines Vakuums entfernt werden. Die resultierenden Polymerisate sind weitgehend frei von Restmonomeren und Oligomeren bis zu einem Molekulargewicht von 1000 Dalton.
US-Patent 4 711 938 umfaßt ein kontinuierliches Verfahren zur Herstellung von PMMA oder MMA-haltigen Copolymerisaten bei Polymerisationstemperaturen von 140 bis 170 Grad C und Umsätzen von bis zu 50 %, wobei die Restmonomeren ebenfalls durch Anlegen eines Vakuums entfernt werden. Die resultierenden Polymerisate zeichnen sich durch eine hohe optische Reinheit und eine enge Molekulargewichtsverteilung aus. In US-Patent 3 637 545 wird die Herstellung von Polymethylmethacrylat mittels kontinuierlicher Massepolymerisation bei Temperaturen zwischen 145 und 165 Grad C und Umsätzen zwischen 40 und 60 beschrieben.

Wiederum werden die Restmonomeren durch Entgasen entfernt, wobei in einer weiteren Ausführungsform der Erfindung während der Reaktion Elastomerteilchen anwesend sein können.
In EP-Patentschrift 0 319 622 B1 wird ein Verfahren zur kontinuierlichen Lösungspolymerisation von (Meth)acrylsäueestern beschrieben, das folgende Schritte umfaßt: (a) Zugabe von Monomeren, Polymerisationshilfsmitteln und Lösungsmitteln solchermaßen, daß der Polymergehalt der Reaktionsmischung unter 50 Gew-% bleibt, (b) Reaktionstemperaturen von 60 bis 130 Grad C und ausreichende Verweilzeiten, um eine 20 bis 95 %ige Umsetzung der Monomeren zu gewährleisten, (c) Übertragung des Polymerisats in einen anderen Polymerisationsreaktor zur (d) Folgepolymerisation bei Reaktionstemperaturen zwischen 60 und 130 Grad C, (e) Übertragung des in (d) entstandenen Rohpolymerisats in einen Endpolymerisationsreaktor, in dem die nicht polymerisierten Bestandteile der Reaktionsmischung durch Flash-Entgasung entfernt werden, sowie (f) eine spezielle Aufbereitung des Endpolymerisats.

### Aufgabe und Lösung

Bis auf die in der EP-PS 0 245 647 dargestellten Lehre bieten die im Stand der Technik referierten Anmelde- oder Patentschriften keinen Lösungsansatz an, wie PMMA-Formmassen hergestellt werden können, die gleichzeitig eine hohe Wärmeformbeständigkeit und damit einen geringen Anteil an isotaktischen Triaden sowie eine hohe Stabilität gegen thermischen Abbau, bedingt durch besondere Endgruppen in den Polymerketten, aufweisen. EP-PS 0 245 647 löst die daraus resultierende Aufgabenstellung hervorragend, PMMA-Formmassen mit hoher Wärmeformbeständigkeit und hoher Stabilität gegen thermischen Abbau bereitzustellen. Da die dort beschriebenen Formmassen per Emulsionspolymerisation hergestellt werden, ist die Isolierung solcher Formmassen aus der wäßrigen Dispersion technisch aufwendig.
Damit resultiert als Aufgabe ein technisch weniger aufwendiges Verfahren zur Herstellung von Polymethacrylat-Formmassen, bestehend zu mehr als 75 Gew.-% aus Methylmethacrylat, mit hoher Wärmeformbeständigkeit und hoher Stabilität gegen thermischen Abbau bereitzustellen. Überraschenderweise wird diese Aufgabe durch ein Verfahren gelöst, bei dem mindestens 70 Gew.-%, bevorzugt mindestens 85 Gew.-% der Polymethacrylat-Formmasse bei einer Monomerkonzentration von mindestens 5 Mol pro Liter Reaktionsgemisch, das vorzugsweise die Monomeren, das daraus gebildete Polymerisat sowie weitere Polymerisationshilfsstoffe enthält, hergestellt werden. Vorzugsweise wird die Polymerisation diskontinuierlich, beispielsweise in einem Rührreaktor, der im Batchverfahren betrieben wird, durchgeführt. Die Polymerisationstemperaturen liegen zwischen 30 und 120 Grad C, bevorzugt zwischen 60 und 100 Grad C. In einer weiteren bevorzugten Ausführungsform der Erfindung liegt der Anteil der Polymerisationsinitiatoren unter 0,05 Gew.-% bezogen auf die Ausgangsstoffe, besonders bevorzugt unter 0,02 Gew-%. Der Anteil des Molekulargewichtsreglers beträgt vorzugsweise 0,1 bis 2 Gew.-% bezogen auf die Ausgangsstoffe, besonders bevorzugt 0,2 bis 1 Gew.-%.

Nach Beendigung der Polymerisation der Monomeren, die bevorzugt Anteile von mehr als 75 Gew-% Methylmethacrylat (MMA) und besonders bevorzugt Anteile von mehr als 95 Gew.-% MMA enthalten, werden die verbleibenden Monomeren, vorzugsweise durch Entgasen in einem Extruder, entfernt. Die resultierenden Polymethacrylat-Polymerisate weisen deutlich höhere Wärmeformbeständigkeiten und höhere Stabilitäten gegen thermischen Abbau auf als Polymethacrylat-Polymerisate, die in Gegenwart niedrigerer Monomerkonzentrationen hergestellt wurden.

### Durchführung der Erfindung

Das erfindungsgemäße Verfahren kann diskontinuierlich in Reaktoren, die mit einem Rühraggregat ausgerüstet sind, durchgeführt werden, wie beispielsweise Rührreaktoren mit Blatt-, Anker-, Scheiben- oder Impeller-Rührern (vgl. hierzu beispielsweise: Kirk-Othmer, Encyclopedia of Chemical Technology, Vol. 19, Seiten 880 bis 914, John Wiley & Sons, New York, 1982). Desweiteren können kontinuierliche Reaktoren, wie Strömungsrohre, die vorzugsweise turbulent durchströmt werden, oder Schneckenförderaggregate, vorzugsweise Doppelschneckenextruder mit einem engen Verweilzeitspektrum, zum Einsatz kommen. Bevorzugt werden diskontinuierliche Rührreaktoren verwendet, bei denen die Rühraggregate einen hohen Durchmischungsgrad gewährleisten.
Die nicht umgesetzten Monomeren können durch Vakuumentgasungsverfahren, wie beispielsweise Flash-Entgasung durch diskontinuierliches Anlegen eines Vakuums, Filmverdampfung oder bevorzugt durch Entgasung in einem Extruder bei angelegtem Vakuum, aus der Reaktionsmischung entfernt werden.
Als erfindungsgemäße Polymethacrylat-Formmassen werden solche Massen verstanden, an deren Aufbau mehr als 75 Gew.-% Methylmethacrylat beteiligt sind, insbesondere solche mit mehr als 95 Gew.-% und vorzugsweise solche mit 98 bis 100 Gew-% Methylmethacrylat als Monomerbaustein enthalten. Gegebenenfalls sind noch Comonomere wie Acrylsäureester, vorzugsweise mit C₁-C₈-Alkyl im Esterrest, Methacrylsäureester, vorzugsweise mit C₂-C₈-Alkyl im Esterrest, (Meth)acrylnitril, (Meth)acrylsäureamide, Styrol bzw. substituierte Styrole, Vinylester oder Vinylamide, Maleinsäure oder deren Derivate sowie gegebenenfalls noch andere copolymerisierbare Monomere anwesend (vgl. hierzu beispielsweise H. Rauch-Puntigam, Th. Völker, Acryl- und Methacrylverbindungen, Springer, Heidelberg, 1967).

### Das Polymerisationsverfahren

Als Polymerisationsinitiatoren werden die an sich für die Polymerisation von Methacrylaten üblichen verwandt, beispielsweise Azoverbindungen, wie Azodiisobutyronitril, sowie Peroxide, wie Dibenzoylperoxid oder Dilauroylperoxid, oder auch andere Peroxidverbindungen, wie beispielsweise t-Butylperoctanoat oder Perketale, wie auch gegebenenfalls Redoxinitiatoren (vgl. hierzu beispielsweise H. Rauch-Puntigam, Th. Völker, Acryl- und Methacrylverbindungen, Springer, Heidelberg, 1967 oder Kirk-Othmer, Encyclopedia of Chemical Technology, Vol. 1, Seiten 286 ff, John Wiley & Sons, New York, 1978). Bevorzugt werden die Polymerisationsinitiatoren in Mengen von 10⁻⁴ bis 0,1 Gew.-% bezogen auf die Ausgangsstoffe, besonders bevorzugt in Mengen von 2 x 10⁻⁴ bis 0,05 Gew.-% und ganz besonders bevorzugt in Mengen von 10⁻³ bis 0,02 Gew.-% eingesetzt.
Als Molekulargewichts- oder Kettenübertragungsregler werden ebenfalls an sich übliche, insbesondere Mercaptane R-SH, wobei R für eine ggfs. cyclische oder verzweigte Alkylgruppe mit 2 bis 20 Kohlenstoffatomen stehen kann, wie n-Butylmercaptan, tert.-Dodecylmercaptan, Ester der Thioglykolsäure oder auch polyfunktionelle Mercaptane mit 2 bis 6 SH-Gruppen, vorzugsweise in Mengen von 0,05 bis 5 Gew.-% bezogen auf die Ausgangsstoffe eingesetzt (vgl. hierzu auch H. Rauch-Puntigam, Th. Völker, Acryl- und Methacrylverbindungen, Springer, Heidelberg, 1967). Besonders bevorzugt sind Mengen an Molekulargewichtsreglern von 0,1 bis 2 Gew.-%, ganz besonders bevorzugt Mengen von 0,2 bis 1 Gew.-%. Weiterhin können auch halogenhaltige Verbindungen, wie beispielsweise CCl₄ oder Benzylbromid für die Molekulargewichtsregelung genutzt werden. Bevorzugt werden allerdings Regler des Typs R-SH oder R'-H, wobei R' für Alkyl, Cycloalkyl oder Aralkyl mit 5 bis 30 Kohlenstoffatomen stehen kann, wie beispielsweise Cumol, die in der Lage sind, die wachsende Polymerkette mit einem H-Atom zu terminieren.
Bei dem erfindungsgemäßen Polymerisationsverfahren geht man von den reinen Monomeren bzw. den Monomermischungen aus, die neben den Polymerisationsinitiatoren und den Molekulargewichtsreglern gegebenenfalls noch weitere Zuschlagstoffe wie beispielsweise Formtrennmittel, Farbstoffe oder Trübungsmittel in Mengen bis zu 10 Gew.-%, bevorzugt in Mengen bis zu 5 Gew.-% bezogen auf die eingesetzten Monomeren enthalten können.
Die Reaktion wird so geführt, daß das Endprodukt der Polymerisation wenigstens zu 70 Gew.-% aus einem Polymerisat besteht, das in Gegenwart einer Monomerkonzentration von mindestens 5 mol Monomeres pro Liter Reaktionsmischung hergestellt wurde.
Dabei sind Polymerisationsprozesse in Gegenwart von Lösungsmitteln, bei denen die lokale Monomerkonzentration abgesenkt wird, auszuschließen. Bei einer völlig homogenen Reaktionsmischung beträgt der mit dem erfindungsgemäßen Verfahren erreichbare Umsatz von Methacrylat-Monomeren zu Polymethacrylat-Polymerisat maximal 55 %, bevorzugt maximal 50 %.
Besonders gut geeignet für das erfindungsgemäße Polymerisationsverfahren für Polymethacrylat-Formmassen sind intensiv durchmischte Rührreaktoren. Die Polymerisationstemperaturen, auf die die Auswahl der Polymerisationsinitiatoren abgestimmt werden muß, liegen vorzugsweise zwischen 30 und 120 Grad C, besonders vorzugsweise zwischen 60 und 100 Grad C. Für das Aufheizen der Reaktionsmischung auf die Polymerisationstemperatur werden die an sich üblichen Methoden des Wärmeeintrags in Reaktoren, wie beispielsweise durch Druckdampf-Wärmetauscher und/oder die freiwerdende Polymerisationsenthalpie benutzt.
Nach Erreichen der Maximalumsätze wird die Reaktion abgebrochen. Dies kann beispielsweise durch schnelles Entfernen der nicht umgesetzten Monomeranteile, wie z.B. in einem separaten Prozeßschritt durch Vakuumentgasung im Reaktor, Filmverdampfung in einem Dünnschichtverdampfer oder durch entgasende Extrusion des Reaktionsgemisches erfolgen. Bevorzugt werden vor der Entfernung der nicht umgesetzten Monomeranteile Polymerisationsinhibitoren in Mengen von bis zu 1 Gew.-% bezogen auf die Reaktionsmischung, die das Wachstum der Polymerketten abbrechen, zugesetzt. Beispielhaft für Polymerisationsinhibitoren seien genannt: sterisch gehinderte Amine, Aminoxyl-Radikale und Phenole, Phosphite, Sulfide mit zwei organischen Stubstituenten oder Metallsalze von Dithiosäuren (vgl. hierzu auch Kirk-Othmer, Encyclopedie of Chemical Technology, Vol. 3, Seiten 130ff, John Wiley & Sons, New York, 1978). Desweiteren kann Sauerstoff als geeigneter Polymerisationsinhibitor genutzt werden.
Die nicht umgesetzten Monomeranteile werden nach der Reaktion in der schon zuvor beschriebenen Weise entfernt. Als bevorzugtes Verfahren ist eine Vakuumentgasung zu nennen, bei der die nicht umgesetzten Monomeranteile zurückgewonnen werden und einer erneuten Reaktion zugeführt werden. Besonders bevorzugt ist die Entgasung des Reaktionsgemischs durch Extrusion, vorzugsweise in einem Ein- oder Doppelschneckenextruder mit Vakuumzone. In einer bevorzugten Ausführungsform der Erfindung wird das Reaktionsgemisch aus Polymethacrylat-Polymerisat und nicht umgesetzten Monomeren nach Beendigung der Reaktion kontinuierlich mit dem Extruder aus dem Rührreaktor ausgetragen. Weiterhin bevorzugt ist die halbkontinuierliche Herstellung der Polymethacrylat-Formmasse durch zeitlich verschobene Polymerisation in mehreren Rührreaktoren, wobei besonders bevorzugt Puffergefäße, wie beispielsweise Wartekessel, verwendet werden, um einen kontinuierlichen Betrieb des Entgasungsextruders zu gewährleisten.

Wird das Reaktionsgemisch vor der Einspeisung in den Entgasungsextruder stark abgekühlt, beispielsweise auf Raumtemperatur oder niedrigere Temperaturen, wird eine Zugabe von bis zu 25 Gew.-%, bezogen auf die Reaktionsmischung, an Lösungsmitteln notwendig, wie beispielsweise Methylmethacrylat, Butylacetat oder Toluol, um eine ausreichend niedrige Viskosität der Reaktionsmischung zu gewährleisten.
Besonders bevorzugt ist jedoch eine Herstellung gänzlich ohne Lösungsmittel.

### Vorteilhafte Wirkungen der Erfindung

Mit dem erfindungsgemäßen Verfahren werden Polymethacrylat-Formmassen mit hohen Wärmeformbeständigkeiten, bevorzugt Wärmeformbeständigkeiten von mehr als 110 Grad C, gemessen als Vicat-Erweichungstemperatur nach DIN 53 460, zugänglich. Besonders bevorzugt werden Polymethacrylat-Formmassen gewonnen, die Vicat-Erweichungstemperaturen von mehr als 112 Grad C aufweisen. Ein weiterer Vorteil der nach dem erfindungsgemäßen Verfahren hergestellten Polymethacrylat-Formmassen ist der niedrige Anteil an isotaktischen Triaden in der Polymethacrylat-Polymerkette (die Taktizität ist allerdings nur für sehr geringe Comonomeranteile neben dem Methacrylat-Monomeren bestimmbar), der neben einem geringen Restmonomeren-Anteil im Polymerisat zur hohen Wärmeformbeständigkeit der Formmassen beiträgt. Die hohe thermische Stabilität der Polymethacrylat-Formmassen verhindert einen thermischen Abbau der Formmassen bei thermoplastischer Verarbeitung und damit eine Erhöhung des Restmonomeren-Gehalts, die ihrerseits wiederum zu einer Erniedrigung der Wärmeformbeständigkeit führen würde.

Das Verfahren zur Herstellung der Polymethacrylat-Formmassen ist technisch problemlos durchzuführen, beispielsweise mit der die Reaktionsbedingungen, wie Verweilzeit, Reaktortemperatur oder Umsatzgrad, sehr genau definierenden Rührkesseltechnologie. Die nicht umgesetzten Monomeren können auf einfache Weise, beispielsweise durch Vakuumdestillation, vom Formmassen-Polymerisat abgetrennt werden und erneut polymerisiert werden, im allgemeinen unter Zusatz der Polymerisationshilfsmittel sowie gegebenenfalls weiteren Monomeranteilen.

Die folgenden Beispiele sollen die Erfindung erläutern.

### BEISPIELE

### Beispiel 1

In einem Glasrührreaktor mit Blattrührer und einem Reaktorinhalt von 1500 cm³ werden 600 g Methylmethacrylat vorgelegt und auf 90 Grad C erwärmt. Danach werden 2,7 g Dodecylmercaptan unter Rühren hinzugegeben. Zur Vermeidung einer Sauerstoffinhibierung der Polymerisation wird die Luft aus dem Rührreaktor durch Argon verdrängt. Innerhalb von 3,5 Stunden wird kontinuierlich ein Gemisch aus 9,928 g Methylmethacrylat und 0,072 g 2,2'-Azobisisobutyronitril bei einer konstanten Polymerisationstemperaturen von 95 Grad C durch Zutropfen hinzugefügt.
Der Monomerumsatz beträgt 54 %. Der erhaltene Sirup läßt sich bei 95 Grad C gut rühren, wobei der Sirup zur Handhabung bei Raumtemperatur und zur Stabilisierung gegen weitere Polymerisation mit 200 g Butylacetat und 0,06 g 4-Hydroxy-2,2,6,6-tetramethylpiperidinooxyl verdünnt wird.

Die Charakterisierung des erhaltenen Polymerisats erfolgt mit der Gelpermeationschromatographie (vgl. hierzu beispielsweise: H.F. Mark et al., Encyclopedia of Polymer Science & Engineering, 2nd Ed., Vol. 10, Seiten 1 bis 19, J. Wiley, New York, 1987)
Es resultieren folgende Molekulargewichte:
Gewichtsmittel M_{w} = 106 000 Dalton
Zahlenmittel Mₙ = 56 200 Dalton
Uneinheitlichkeit U = M_{w}/Mₙ-1 = 0,89

### Beispiel 2

Die Polymerisation wird analog Beispiel 1 durchgeführt, wobei die Reaktionstemperatur bei 85 Grad C liegt und ein Gemisch aus 10 g Methylmethacrylat und 70 ppm 2,2'-Azobisisobutyronitril während 6 Stunden zugetropft wird.
Der Monomerumsatz beträgt 45 %.
Es resultieren folgende Molekulargewichte:
Gewichtsmittel M_{w} = 115 000 Dalton
Zahlenmittel Mₙ = 65 000 Dalton
Uneinheitlichkeit U = M_{w}/Mₙ-1 = 0,75

### Beispiel 3

Der Ansatz gemäß Beispiel 2 wird mengenmäßig verdoppelt und unter den in Beispiel 2 angegebenen Reaktionsbedingungen polymerisiert.
Der Monomerumsatz beträgt 44 %.
Es resultieren folgende Molekulargewichte:
Gewichtsmittel M_{w} = 115 000 Dalton
Zahlenmittel Mₙ = 59 300 Dalton
Uneinheitlichkeit U = M_{w}/Mₙ-1 = 0,94

### Beispiel 4

Isolierung der Polymethylmethacrylat-Formmasse. Die Ansätze gemäß den Beispielen 1 bis 3 werden vereinigt und bei 250 Grad C und einem Druck von 5 x 10³ Pa in der letzten Entgasungszone eines Einschneckenextruders entgast. Der Durchsatz wird so gewählt, daß pro Stunde 440 g Formmassen-Granulat nach Heißabschlag anfallen. Das Granulat der Polymethylmethacrylat-Formmasse ist glasklar und weist eine Lösungsviskosität in Chloroform nach DIN 53 018 von 52,3 cm³g⁻¹ auf.
Aus diesem Granulat wird bei 190 Grad C und 150 bar eine Fließpreßplatte hergestellt. Nach dem Fließpreßverfahren beträgt die Lösungsviskosität der Formmasse in Chloroform 53,0 cm³g⁻¹. Als Vicat-Erweichungstemperatur nach DIN 53 460 wird für die Formmasse VST-B = 118 Grad C bestimmt.

### Beispiel 5

In einem 100 l VA-Polymerisationsreaktor mit Blattrührer werden unter Argon als Schutzgas 40 kg Methylmethacrylat vorgelegt und unter Rühren auf 90 Grad C erwärmt. Man gibt 180 g Dodecylmercaptan zu dem auf 90 Grad C erwärmten Methylmethacrylat und startet die Polymerisation durch Zugabe von 200 g einer 0,4 %igen Lösung von 2,2'-Azobisisobutyronitril in Methylmethacrylat.
Die Reaktorinnentemperatur wird durch Kühlung des Reaktormantels im Bereich 90 Grad C bis 91 Grad C konstant gehalten.
Nach jeweils 40, 80, 120 und 160 Minuten vom Startpunkt der Polymerisation an werden jeweils weitere 100 g einer 0,4 %igen Lösung von 2,2'-Azobisisobutyronitril in Methylmethacrylat zugesetzt.
100 Minuten nach der letzten Initiatorzugabe wird die Reaktion durch Zugabe von 4 g 4-Hydroxy-2,2,6,6-Tetramethylpiperidin-1-oxyl abgebrochen. Anschließend wird auf Raumtemperatur abgekühlt. Man erhält eine klare, farblose Polymerlösung mit einem Feststoffgehalt von 38,7 %.

An dem Polymerisationsfeststoff werden Molekulargewichte und Taktizität bestimmt, wobei die Taktizität mittels ¹³C-NMR bestimmt wurde (zur Taktizität von PMMA vgl. beispielsweise: Viweg, Esser, Kunststoff-Handbuch, Band IX, Seiten 28, 29, Carl Hanser Verlag, München, 1975). Taktizität: 3,5 % isotaktische, 36,5 % heterotaktische, 60 % syndiotaktische Triaden.
MGV-GPC: M_{w} = 1,07 x 10⁵, Mₙ = 5,94 x 10⁴, U = 0,8.

Der so erhaltene Sirup wird bei 250 Grad C (Extruderzylindertemperatur) mit einem Drucksatz von 4,9 kg/h entgast. Man erhält ein klares, nahezu farbloses Granulat, wobei die Lösungsviskosität des granulierten Polymerisats in Chloroform nach DIN 53018: 50,0 cm³g⁻¹ beträgt.
Aus dem auf diesem Wege erhaltenen Granulat werden Prüfkörper durch Spritzguß hergestellt. Dabei findet man bei einer Verarbeitungstemperatur von 250 Grad C einen Prüfkörper mit einer Vicaterweichungstemperatur nach DIN 53460 [VST (B50)] von 114 Grad C. Auch beim Spritzgießen unter verschärften Bedingungen (270 Grad C) wird noch eine VST (B50) von 114 Grad C gefunden. Der Restmonomerengehalt liegt sowohl in den bei 250 Grad C als auch in der bei 270 Grad C gespritzten Prüfkörpern bei < 0,4 %.
Mit der PMMA-Formmasse gemäß Beispiel 5 liegt also nicht nur eine besonders wärmeformbeständige Formmasse vor. Auch die Verarbeitungsstabilität des erfindungsgemäß hergestellten PMMA-Polymerisats ist sehr hoch.

## Patentansprüche

1. Verfahren zur Herstellung von Polymethacrylat-Formmassen, bestehend zu mehr als 75 Gew.-% aus Methylmethacrylat,
mit hoher Wärmeformbeständigkeit und mit hoher Stabilität gegen thermischen Abbau, durch Polymerisation von Methacrylat-Monomeren in Reaktoren, in denen ein hoher Durchmischungsgrad gewährleistet ist, wobei nach Erreichen eines definierten Umsatzes die Polymerisation abgebrochen wird und danach die nicht umgesetzten Monomeren aus der Reaktionsmischung abgetrennt werden,
dadurch gekennzeichnet,
daß mindestens 70 Gew.-% der Formmasse bei einer Monomerkonzentration von mehr als 5 Mol/Liter Reaktionsgemisch und einer Polymerisationstemperatur zwischen 30 und 120°C hergestellt werden.

2. Verfahren zur Herstellung von Polymethacrylat-Formmassen gemäß Anspruch 1, dadurch gekennzeichnet, das der Anteil des Polymerisationsinitiators am Reaktionsgemisch unter 0,05 Gew.-% liegt.

3. Verfahren zur Herstellung von Polymethacrylat-Formmassen gemäß den Ansprüchen 1 bis 2, dadurch gekennzeichnet, daß der Anteil des Molekulargewichtsreglers am Reaktionsgemisch zwischen 0,1 und 2 Gew.-% liegt.

4. Verfahren zur Herstellung von Polymethacrylat-Formmassen gemäß den Ansprüchen 1 bis 3, dadurch gekennzeichnet, daß die Polymethacrylat-Formmassen mehr als 75 Gew.-% Methylmethacrylat als einpolymerisierte Monomeranteile enthalten.

5. Verfahren zur Herstellung von Polymethacrylat-Formmassen gemäß den Ansprüchen 1 bis 4, dadurch gekennzeichnet, daß das Polymerisationsverfahren diskontinuierlich geführt wird.

6. Verfahren zur Herstellung von Polymethacrylat-Formmassen gemäß den Ansprüchen 1 bis 5, dadurch gekennzeichnet, daß die nicht umgesetzten Monomeranteile durch Vakuumentgasung in einem separaten Prozeßschritt abgetrennt werden.

7. Verfahren zur Herstellung von Polymethacrylat-Formmassen gemäß den Ansprüchen 1 bis 6, dadurch gekennzeichnet, daß die abgetrennten nicht umgesetzten Monomeranteile einer erneuten Reaktion zugeführt werden.

8. Verfahren zur Herstellung von Polymethacrylat-Formmassen gemäß den Ansprüchen 1 bis 7, dadurch gekennzeichnet, daß zur Beendigung der Polymerisation dem Reaktionsgemisch Polymerisationsinhibitoren in Mengen von 10⁻² bis zu 1 Gew.-% bezogen auf die Reaktionsmischung zugesetzt werden.

## Claims

1. A process for preparing polymethacrylate moulding compounds comprising more than 75 wt.% of methyl methacrylate and which have high dimensional stability under heat and a high resistance to thermal disintegration, by means of which process methacrylate monomers are polymerised in reactors that ensure a high degree of intermixing, the polymerisation being discontinued after a specified reaction has been achieved and the non-reacted monomers being separated from the reaction mixture, characterised in that at least 70 wt.% of the moulding compound is prepared with a monomer concentration of more than 5 mol/litre of reaction mixture and at a polymerisation temperature between 30 and 120°.

2. A process for preparing polymethacrylate moulding compounds according to claim 1, characterised in that the amount of polymerisation initiator in the reaction mixture is below 0.05 wt.%.

3. A process for preparing polymethacrylate moulding compounds according to claims 1 to 2, characterised in that the amount of molecular weight regulator in the reaction mixture is between 0.1 and 2 wt.%.

4. A process for preparing polymethacrylate moulding compounds according to claims 1 to 3, characterised in that the polymethacrylate moulding compounds comprise more than 75 wt.% of methyl methacrylate as homopolymerised monomer portions.

5. A process for preparing polymethacrylate moulding compounds according to claims 1 to 4, characterised in that the polymerisation process is carried out discontinuously.

6. A process for preparing polymethacrylate moulding compounds according to claims 1 to 5, characterised in that the non-reacted monomer portion is isolated in a separate process step by vacuum distillation.

7. A process for preparing polymethacrylate moulding compounds according to claims 1 to 6, characterised in that the isolated, non-reacted monomer portion undergoes a subsequent reaction.

8. A process for preparing polymethacrylate moulding compounds according to claims 1 to 7, characterised in that polymerisation inhibitors are added to the reaction mixture, in amounts of 10⁻² up to 1 wt.% based on the reaction mixture, in order to complete the polymerisation.

## Revendications

1. Procédé de fabrication de masses à mouler de polyméthacrylate, se composant pour plus de 75 % en poids de méthylméthacrylate, ayant une stabilité dimensionnelle à chaud élevée et une stabilité élevée contre la décomposition thermique, procédé par polymérisation de monomères de méthacrylate dans des réacteurs, dans lesquels est assuré un degré élevé de mélange intime, tandis qu'après avoir obtenu une conversion définie la polymérisation est arrêtée et ensuite les monomères non transformés sont séparés du mélange réactionnel,
caractérisé en ce qu'
au moins 70 % en poids de la masse à mouler sont produits avec une concentration en monomères de plus de 5 mol/litre de mélange réactionnel et une température de polymérisation comprise entre 30 et 120°C.

2. Procédé de fabrication de masses à mouler de polyméthacrylate selon la revendication 1,
caractérisé en ce que
la proportion de l'excitant de polymérisation dans le mélange réactionnel se situe en dessous de 0,05 % en poids.

3. Procédé de fabrication de masses à mouler de polyméthacrylate selon les revendications 1 à 2,
caractérisé en ce que
la proportion du régulateur de poids moléculaire dans le mélange réactionnel se situe entre 0,1 et 2 % en poids.

4. Procédé de fabrication de masses à mouler de polyméthacrylate selon les revendications 1 à 3,
caractérisé en ce que
les masses à mouler de polyméthacrylate contiennent plus que 75 % en poids de méthacrylate de méthyle comme parties de monomères entrées en polymérisation.

5. Procédé de fabrication de masses à mouler de polyméthacrylate selon les revendications 1 à 4,
caractérisé en ce que
le procédé de polymérisation est guidé de manière discontinue.

6. Procédé de fabrication de masses à mouler de polyméthacrylate selon les revendications 1 à 5,
caractérisé en ce que
les proportions de monomères non transformées sont séparées par dégazage sous vide dans une étape de procédé séparée.

7. Procédé de fabrication de masses à mouler de polyméthacrylate selon les revendications 1 à 6,
caractérisé en ce que
les proportions de monomères non transformées sont amenées à une nouvelle réaction.

8. Procédé de fabrication de masses à mouler de polyméthacrylate selon les revendications 1 à 7,
caractérisé en ce qu'
à la fin de la polymérisation on ajoute au mélange réactionnel des inhibiteurs de polymérisation en quantité de 10⁻² à 1 % en poids par rapport au mélange réactionnel.
